# EUROPÄISCHE PATENTSCHRIFT

(11) **EP 2 176 081 B1**
(45) Veröffentlichungstag und Bekanntmachung des Hinweises auf die Patenterteilung: **20.04.2011**
(21) Anmeldenummer: 08773725.0
(22) Anmeldetag: 27.06.2008
(51) Int. Cl.: B60H 1/00

(54) **LUFTVERTEILER- UND/ODER LUFTMISCHVORRICHTUNG**
AIR DISTRIBUTING AND/OR AIR MIXING DEVICE
DISPOSITIF DE DISTRIBUTION ET/OU DE MÉLANGE D'AIR

(30) Priorität: 10.07.2007 DE 102007032479
(43) Veröffentlichungstag der Anmeldung: 21.04.2010
(73) Patentinhaber: Behr GmbH & Co. KG, 70469 Stuttgart (DE)
(72) Erfinder: PARRET, Thomas, F-70220 Fougerolles (FR); OTZELBERGER, Norbert, 70376 Stuttgart (DE); SCHWEIZER, Gebhard, 71229 Leonberg (DE)
(86) Internationale Anmeldenummer: PCT/EP2008/005251
(87) Internationale Veröffentlichungsnummer: WO 2009/007017

(56) Entgegenhaltungen:
- EP-A- 1 205 320
- DE-A1- 10 322 457
- DE-A1- 19 805 883
- GB-A- 2 052 728
- US-A1- 2006 130 406
- US-B1- 6 695 691

## Beschreibung

Die Erfindung betrifft eine Luftverteiler- und/oder Luftmischvorrichtung, insbesondere für eine Kraftfahrzeugklimaanlage, gemäß dem Oberbegriff des Anspruchs 1.

Aus der DE 103 22 457 A1, der als nächstliegender Stand der Technik angesehen wird, ist eine Luftmischvorrichtung bekannt, bei der im Luftführungsgehäuse zwei Luft-Einlässe und ein Luft-Auslass vorgesehen sind, wobei die beiden Luft-Einlässe durch eine Klappe mit durchgehender Klappenfläche derart verschließbar sind, dass entweder ein Einlass ganz verschlossen und der zweite Einlass ganz freigegeben ist, oder dass beide Einlässe nur teilweise verschlossen bzw. freigegeben sind. Hierbei sind die Luft-Einlässe vorzugsweise im Wesentlichen parallel zueinander angeordnet. Die einstückig ausgebildete Klappe wird mittels zwei übereinander angeordnete Kurvenbahnen und zwei an der Klappe angebrachte, miteinander fluchtende Zapfen geführt, wobei die Stellbewegungen über Stellhebel an die Klappe übertragen werden. Neben besagter, durchgehender Klappenfläche können auch Luftleitelemente an der Klappenfläche und/oder den Steilhebeln vorgesehen sein, welche die Luftmischung beeinflussen. Bei Umkehr der Strömungsrichtung der Luft ist eine entsprechende Vorrichtung auch als eine Luftverteilervorrichtung verwendbar.

Zur bedarfsgerechten Umschaltung von Frischluft auf Umluft ist aus der DE 198 05 883 C2 eine Umluftklappe bekannt, bei welcher die Umluftklappe eine in der Klappenfläche derselben ausgebildete, mittels einer verschwenkbaren Nebenklappe ausgebildete Durchtrittsöffnung aufweist. Die Schwenkachsen der beiden Klappen verlaufen hierbei parallel und beabstandet voneinander, wobei die Schwenkachse der Nebenklappe auf einer Kreisbahn um die Schwenkachse der (Haupt-)Klappe liegt.

Eine vergleichbare Integration von einer Nebenklappe in eine Hauptklappe ist beispielsweise bei Trommelklappen bekannt, welche ebenfalls der Regelung der Frisch- und Umluftzufuhr dienen.

Aus der DE 196 03 944 C1 ist ferner eine Heizungs- oder Klimaanlage für Fahrzeuginnenräume mit einem Warm- und Kaltluftkanal bekannt, die in eine Mischkammer münden, und mit zwei getrennt ausgebildeten, die Mündungsquerschnitte steuernden Luftklappen. Zur Sicherstellung einer ausreichend guten Temperierung und Vermischung der aus der Mischkammer austretenden Mischluft bei extrem unterschiedlichen Mündungsquerschnitten von Warm- und Kaltluftkanal ist in der Kaltluftklappe ein Tor zum Kaltluftdurchtritt ausgebildet und an der Kaltluftklappe ein Torflügel zum Steuern der zum Kaltluftdurchtritt freigegebenen Toröffnung schwenkbar gehalten, d.h. es ist in der Kaltluftklappe eine Öffnung vorgesehen, welche durch eine Nebenklappe geregelt wird. Die Warmluftklappe ist hierbei auf herkömmliche Weise ausgebildet.

Es ist Aufgabe der Erfindung, eine verbesserte Mischvorrichtung zur Verfügung zu stellen.

Diese Aufgabe wird gelöst durch eine Mischvorrichtung mit den Merkmalen des Anspruchs 1. Vorteilhafte Ausgestaltungen sind Gegenstand der Unteransprüche.

Erfindungsgemäß ist eine Luftverteiler- und/oder Luftmischvorrichtung mit einem Luftführungsgehäuse und einer im Luftführungsgehäuse angeordneten, verstellbaren Klappe vorgesehen, welche Zapfen aufweist, die in mindestens einer Kurvenbahn geführt sind, wobei die Klappe in ihrer Haupt-Klappenfläche integriert mindestens eine Öffnung aufweist, welche mittels einer an der Haupt-Klappenfläche angebrachten und gegenüber derselben verschwenkbaren Nebenklappe regelbar verschließ- und öffenbar ist. Der Nachteil von Schiebeklappen, dass sie in Zwischenstellungen große Bereiche abdecken, wird dadurch beseitigt, dass in den entsprechenden Zwischenstellungen Öffnungen, die in der Hauptklappenfläche vorgesehen sind, von Nebenklappen freigegeben werden, so dass nicht nur seitlich an der Klappe vorbei, sondern auch durch die Öffnungen hindurch Luft strömen kann. Das Strömungsverhalten der Klappe kann dadurch bedarfsgereicht angepasst und optimiert werden. Die Verwendung einer erfindungsgemäßen, schiebetürartigen Klappe bringt somit neben den bekannten, akustischen Vorteilen auch Vorteile in Bezug auf den Strömungsverlauf der Luft. Hierbei kann die Klappe kompakt ausgebildet sein, so dass sie insbesondere bei den begrenzten Bauräumen von Kraftfahrzeug-Klimaanlagen verwendet werden kann. Hierbei ist sowohl eine Verwendung als Mischklappe (sowohl als Mischklappe für warme und kalte Luft in einer Klimaanlage, als auch als Frischluft-Umluft-Mischklappe), als auch als Verteilerklappe (sowohl nach dem Mischraum einer Klimaanlage zur Luftverteilung auf verschiedene Luftkanäle, als auch in einem Ausblasgrill eines Luftausströmers am Ende eines Luftkanals) möglich. Das Vorsehen von Kurvenbahnen für die Regelung der Nebenklappen in Abhängigkeit der Stellung der Hauptklappe vereinfacht die Kinematik. Zusätzliche Klappen können gegebenenfalls entfallen. Besonders bevorzugt sind zwei bis vier, insbesondere bevorzugt zwei oder drei, Nebenklappen vorgesehen.

Die Nebenklappe weist erfindungsgemäß mindestens einen Zapfen auf, welcher in einer Kurvenbahn geführt ist. Hierbei kann - sofern mehrere Nebenklappen vorgesehen sind - für jede der Nebenklappen eine eigene Kurvenbahn zur Regelung derselben vorgesehen sein. Bei entsprechender Auslegung ist auch eine gemeinsame Kurvenbahn für zwei oder mehr Nebenklappen möglich.

Die Schwenkachsen der Nebenklappen verlaufen besonders bevorzugt parallel zueinander. Ist eine entsprechende Kinematik für die Nebenklappen vorgesehen, so können die Schwenkachsen auch schräg zueinander verlaufen.

Bevorzugt, insbesondere im Falle einer Verwendung einer erfindungsgemäßen Klappe als Mischklappe, ist die Klappe bogenförmig gekrümmt ausgebildet, wobei vorzugsweise die Nebenklappe in Richtung Krümmungsmittelpunkt öffnet.

Die Nebenklappe ist vorzugsweise mittels an einer Kante verlaufender Scharniere, insbesondere mittels Filmscharniere, an der Klappe verschwenkbar angebracht. Eine derartige Ausgestaltung ist sehr einfach aufgebaut und herstellbar. Ferner kann eine derartige Klappe geräuscharm betätigt werden. Klappergeräusche können in fast allen Stellungen sicher ausgeschlossen werden.

Die Nebenklappe kann alternativ auch schmetterlingsklappenartig an der Klappe verschwenkbar angebracht sein. Für eine Betätigung einer derartigen Klappe sind nur relativ geringe Stellkräfte erforderlich, insbesondere wenn ein großer Luftmassestrom durch die Klappe geregelt wird.

Bevorzugt sind mindestens zwei Nebenklappen vorgesehen, welche mittels Zapfen betätigbar sind, die in einer gemeinsamen Kurvenbahn verlaufen angeordnet sind. Eine derartige Ausgestaltung ist insbesondere dann vorteilhaft, wenn die Hauptklappe in einer geraden Kurvenbahn verschiebbar ist.

Besonders bevorzugt ist die Klappe gekrümmt ausgebildet, wobei der Krümmungsmittelpunkt der Klappe auf der Seite der Klappenfläche liegt, die von der Seite, auf welcher eine Welle zur Betätigung der Klappe angeordnet ist, abgewandt ist.

Eine Dichtkante sorgt insbesondere bei Luftmischvorrichtungen für eine Trennung von kalter und warmer Luft. Die Dichtkante kann beispielsweise durch einen angespritzten Elastomerrand oder durch einen angeklebten Rand aus einem Schaum gebildet sein.

An der Hauptklappe und/oder den Nebenklappen können Luftleitelemente ausgebildet sein, welche beispielsweise die Mischung der Luft verbessern.

Im Folgenden wird die Erfindung anhand zweier Ausführungsbeispiele mit Varianten unter Bezugnahme auf die Zeichnung im Einzelnen erläutert. In der Zeichnung zeigen:
- Fig. 1: einen Schnitt durch eine Kraftfahrzeug-Klimaanlage mit einer er- findungsgemäßen Luftmischvorrichtung gemäß dem ersten Aus- führungsbeispiel,
- Fig. 2: einen Fig. 1 entsprechenden Schnitt mit Darstellung einer ande- ren Mischstellung,

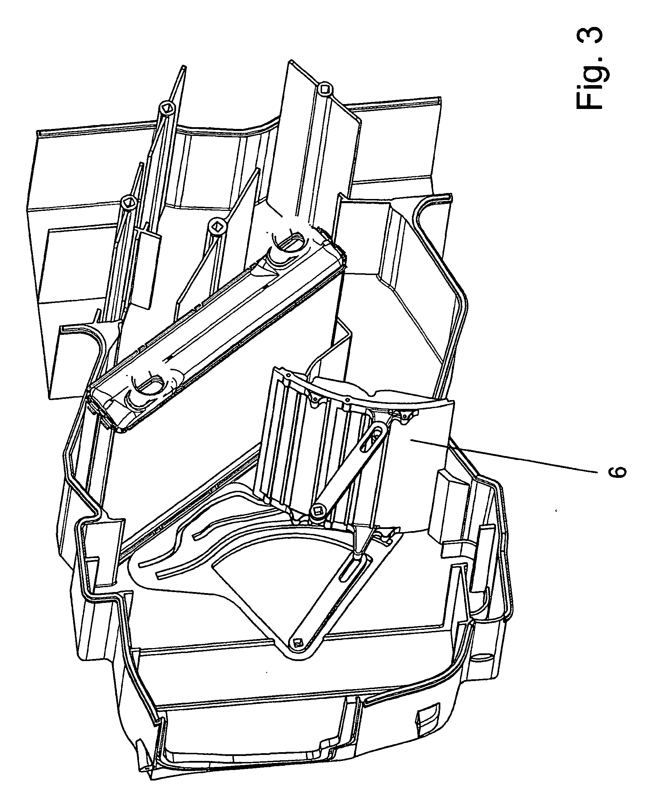

- Fig. 3: eine perspektivische, aufgerissene Darstellung der Klimaanlage mit Luftmischvorrichtung von Fig. 1,

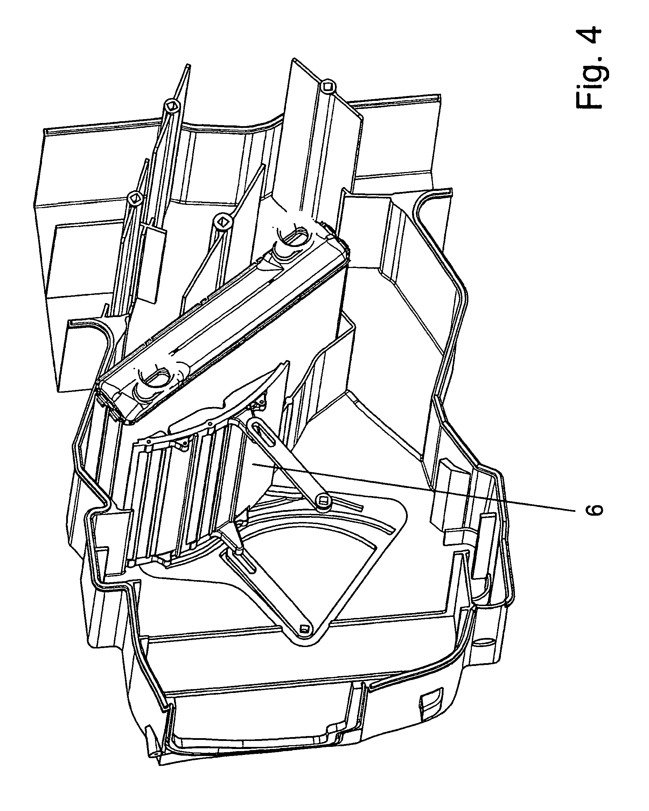

- Fig. 4: eine Fig. 3 entsprechende Darstellung mit der Luftmischvorrich- tung in einer anderen Betriebsstellung,
- Fig. 5: eine Fig. 3 entsprechende Darstellung mit der Luftmischvorrich- tung in einer anderen Betriebsstellung,

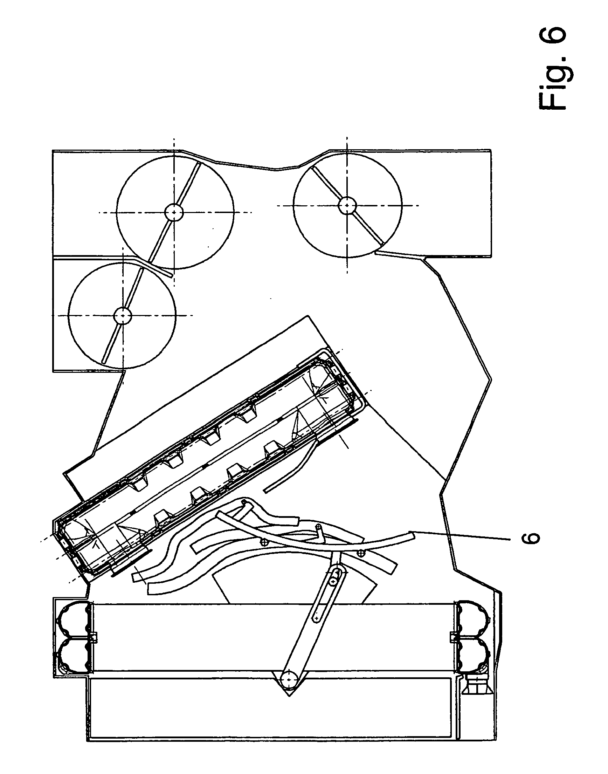

- Fig. 6: eine Fig. 1 entsprechende Darstellung mit einer ersten Betäti- gungsart,
- Fig. 7: eine Fig. 1 entsprechende Darstellung mit einer zweiten Betäti- gungsart,
- Fig. 8: eine perspektivische Detailansicht der eingebauten Klappe von Fig. 1,
- Fig. 9: eine perspektivische Ansicht der Klappe von Fig. 8,
- Fig. 10: eine andere perspektivische Ansicht der Klappe von Fig. 8,

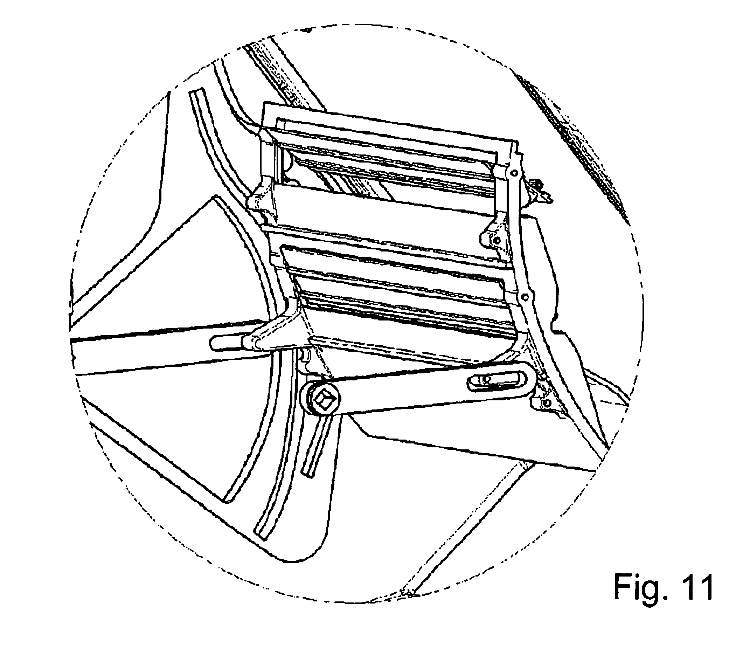

- Fig. 11: eine perspektivische Detailansicht einer eingebauten Klappe gemäß einer Variante,

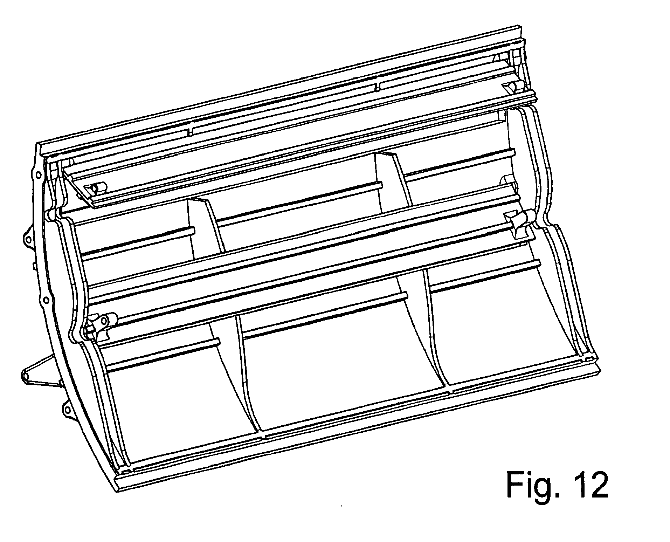

- Fig. 12: eine perspektivische Ansicht der Klappe von Fig. 11,

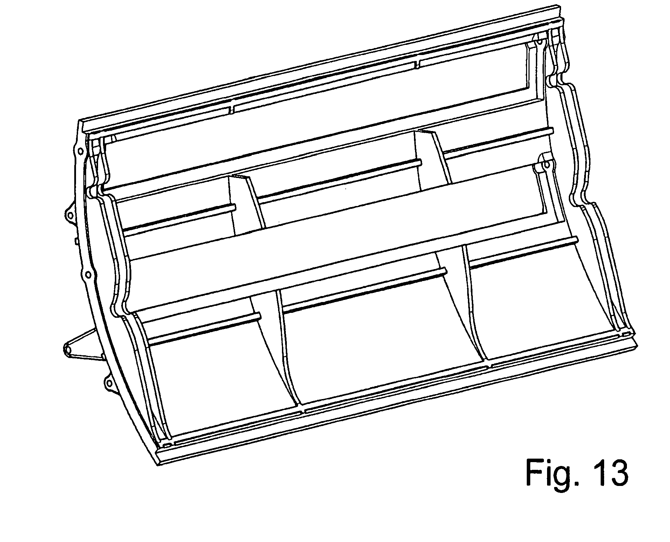

- Fig. 13: eine Fig. 12 entsprechende Ansicht der Klappe mit geänderter Nebenklappenstellung,
- Fig. 14: eine perspektivische, aufgerissene Ansicht eines Teils einer Kraftfahrzeug-Klimaanlage mit einer erfindungsgemäßen Luftver- teilervorrichtung gemäß einem zweiten Ausführungsbeispiel,
- Fig. 15: eine beispielhafte Darstellung einer Klappe mit zwei Nebenklap- pen, wie sie beispielsweise als Luftverteilervorrichtung für eine Kraftfahrzeug-Klimaanlage verwendet werden kann, und
- Fig. 16: eine beispielhafte Darstellung einer Klappe mit drei Nebenklap- pen, wie sie beispielsweise als Luftverteilervorrichtung für eine Kraftfahrzeug-Klimaanlage verwendet werden kann.

Eine Kraftfahrzeug-Klimaanlage 1 mit einem in einem Luftführungsgehäuse 2 angeordneten Verdampfer 3 und Heizer 4 weist zur Luftverteilung der vom Verdampfer 3 kommenden Luft auf den Heizer 4 und dem hierzu parallel verlaufenden Kaltluft-Bypass 5 eine Luftmischvorrichtung, gebildet durch eine Mischklappe 6 auf, die nachfolgend näher erläutert wird. Auf die Mischklappe 6 wird im Folgenden auch als Luftmischvorrichtung Bezug genommen. Um ein Rückströmen von Kaltluft zum Heizer 4 zu verhindern, ist hinter dem Heizer 4 eine weitere Klappe 7 angeordnet. Die Luftverteilung auf die einzelnen Luftkanäle, nämlich den Defrostkanal D, den Belüftungskanal B und den Fußraumkanal F, zum Fahrzeuginnenraum erfolgt gemäß dem ersten Ausführungsbeispiel mittels einer Mehrzahl von herkömmlichen Schmetterlingsklappen 8. Bei entsprechender, geeigneter Anordnung der einzelnen Luftaustrittsöffnungen zu den Luftkanälen ist prinzipiell jedoch auch die Verwendung einer erfindungsgemäßen Luftverteilervorrichtung möglich.

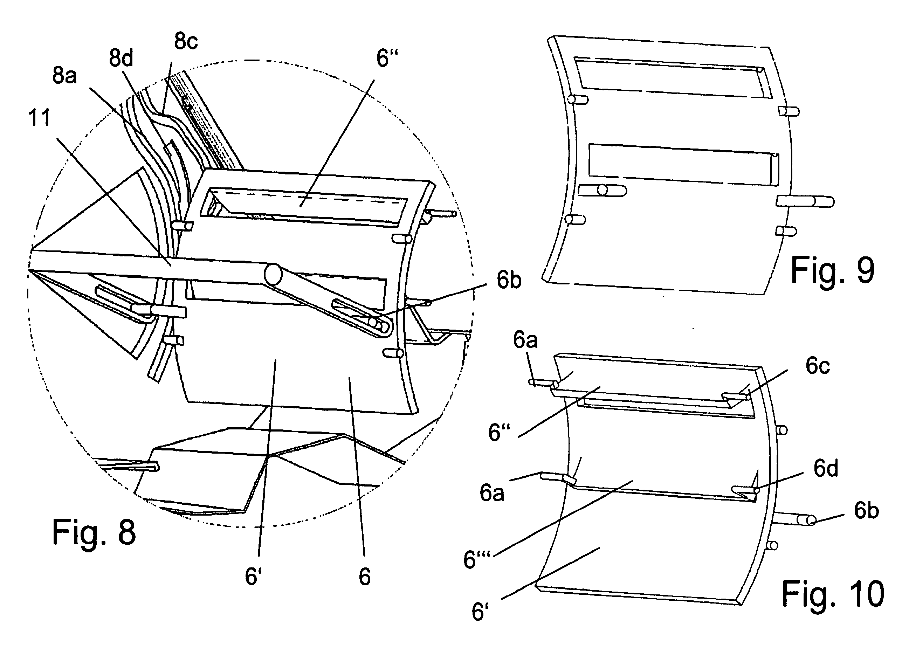

Die Luftmischvorrichtung weist eine Hauptklappe 6' und zwei in die Hauptklappe 6' integrierte Nebenklappen 6" und 6'" auf, welche in der Hauptklappenfläche ausgebildete, vorliegend langgestreckt rechteckförmige Öffnungen regelbar verschließen. Wie aus den Figuren 8 bis 10 ersichtlich, sind an der Hauptklappe 6' oben und unten jeweils zwei nach oben bzw. unten überstehende Zapfen 6a ausgebildet, welche der Führung der Hauptklappe 6' in im Luftführungsgehäuse 2 ausgebildeten Kurvenbahnen 8a dienen. Ferner ist oben und unten jeweils ein Betätigungszapfen 6b ausgebildet. Jeder der Betätigungszapfen 6b ist in einem Langloch 9 eines Hebelarms 10 verschiebbar aufgenommen. Der Hebelarm 10 ist mit seinem, dem Langloch 9 gegenüberliegenden Ende an einer Welle 11 angebracht, welche mit einer Betätigungseinrichtung (nicht näher dargestellt) verbunden ist. Als Betätigungseinrichtung ist vorliegend ein elektrisch betätigter Stellmotor vorgesehen. Die Welle 11 ist vorliegend luftanströmseitig des Verdampfers 3 verlaufend angeordnet.

Zur Versteifung der Hauptklappe 6' sind senkrecht zur Schwenkachse verlaufende Rippen an der Innenfläche vorgesehen, die von den Öffnungen der Nebenklappen 6" und 6'" unterbrochen sind. Hierbei ist ausreichend Freiraum für die Schwenkbewegung der Nebenklappen 6" und 6'" vorgesehen, so dass die Rippen die Nebenklappen nicht behindern.

Jede der Nebenklappen 6" und 6'" ist mit einer Längskante an der Hauptklappe 6' verschwenkbar angebracht, vorliegend mittels eines sogenannten Filmscharniers. Am dem, dem Filmscharnier gegenüberliegenden Ende sind oben und unten jeweils nach oben bzw. unten überstehende Zapfen 6c bzw. 6d ausgebildet, welche in weiteren Kurvenbahnen 8c bzw. 8d geführt werden und - entsprechend dem Verlauf der Kurvenbahnen und der Position der Hauptklappe 6', die ihrerseits durch die Kurvenbahn 8a geführt wird, - die Nebenklappen 6" und 6"' gegenüber der Hauptklappe 6' entsprechend verschwenken und somit die beiden rechteckförmigen Öffnungen in der Fläche der Hauptklappe 6' öffnen oder schließen.

Gemäß dem ersten Ausführungsbeispiel ist die Klappenfläche der Hauptklappe 6' bogenförmig gekrümmt ausgebildet. Die erste Nebenklappe 6" ist nach innen öffnend am benachbart dem Heizer 4 angeordneten Ende der Mischklappe 6 angeordnet. Hierbei ist die Schwenkachse der ersten Nebenklappe 6" relativ nahe dem äußeren Ende der Hauptklappe 6'. Die Schwenkachse der zweiten Nebenklappe 6'" ist etwa mittig bezüglich der Hauptklappe 6' angeordnet, wobei auch diese Nebenklappe 6'" nach innen öffnet und vorliegend dieselbe Öffnungsrichtung hat (siehe Fig. 10). Beide Nebenklappen 6" und 6'" weisen vorliegend einander entsprechende Abmessungen auf.

Die Abdichtung der Hauptklappe 6' gegenüber den Anlageflächen am Luftführungsgehäuse 2 wie auch der Nebenklappen 6" und 6'" gegenüber den Anlageflächen an der Hauptklappe 6' erfolgt vorliegend mittels angespritzter Weichkomponenten. Alternativ kann die Abdichtung auch mittels aufgeklebter Elemente, beispielsweise aus einem geschäumten Material, erfolgen.

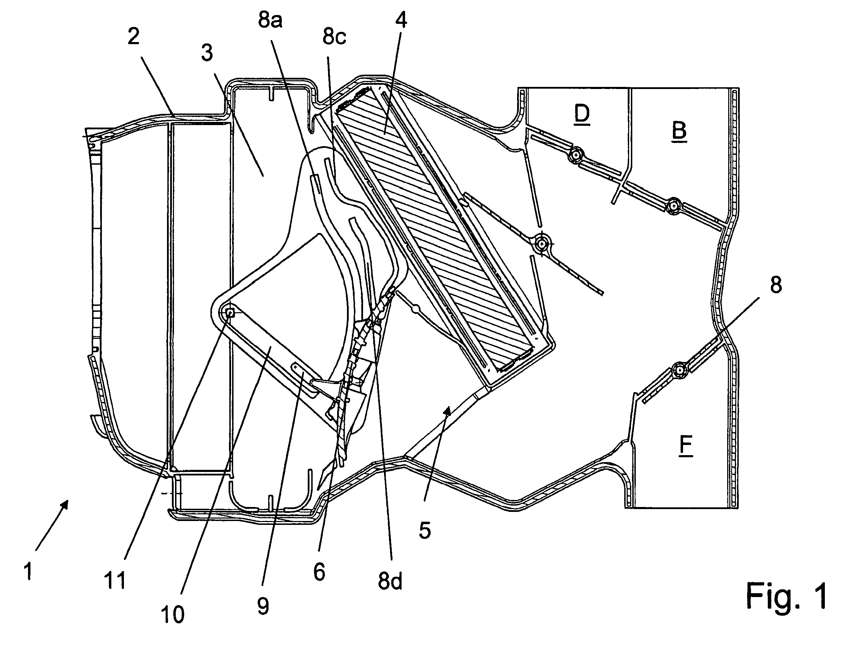

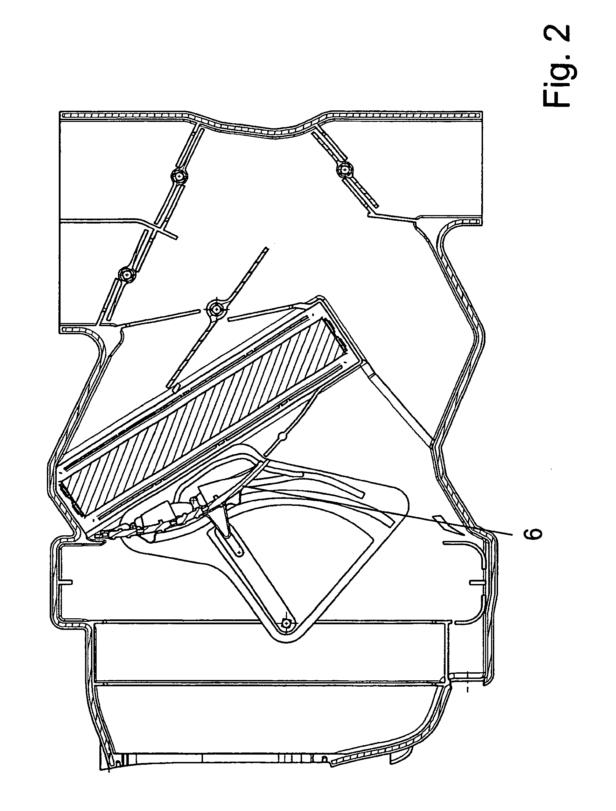

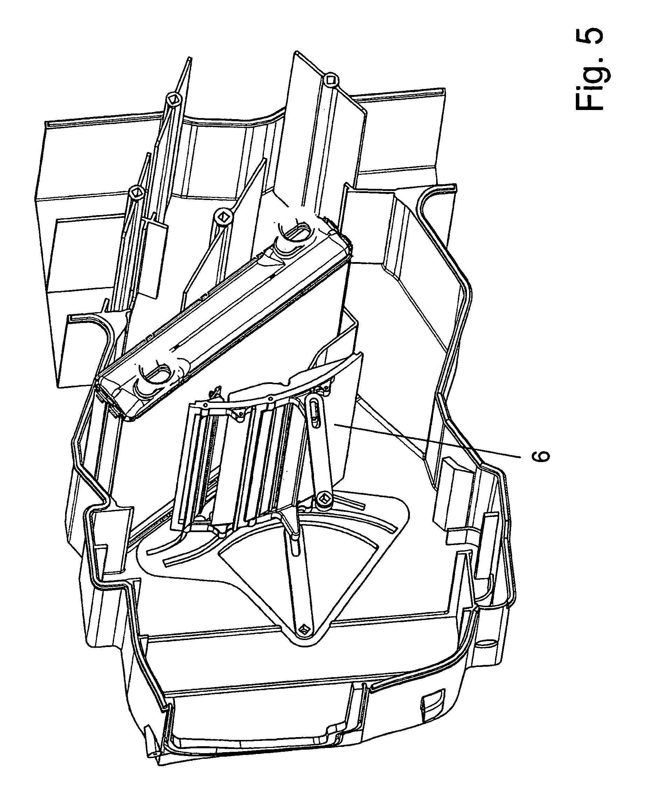

Die Mischklappe 6 wird vorliegend derart geregelt, dass in den beiden Endstellungen jeweils die Nebenklappen 6" und 6'" ganz geschlossen sind, d.h. der gesamte Luftstrom wird entweder durch den Heizer 4 geleitet, wie in Fig. 1 dargestellt, oder durch den Bypass 5 geleitet, wie in Fig. 2 dargestellt. Dadurch, dass sich die Nebenklappen 6" und 6'" in Zwischenstellungen öffnen (siehe Fig. 5), wird eine breitere und damit gleichmäßigere Luftverteilung auf den Heizer 4 ermöglicht, so dass die den Heizer 4 durchströmende Luft gleichmäßiger und somit auch in Bezug auf den Wirkungsgrad besser erwärmt werden kann.

Gemäß einer Variante des ersten Ausführungsbeispiels sind die Nebenklappen an der Hauptklappe mittels herkömmlicher Scharniere montiert. Hierbei kann - bei entsprechender Ausgestaltung - auch ein Anspritzen der Kunststoffkomponenten an den Scharnieren erfolgen.

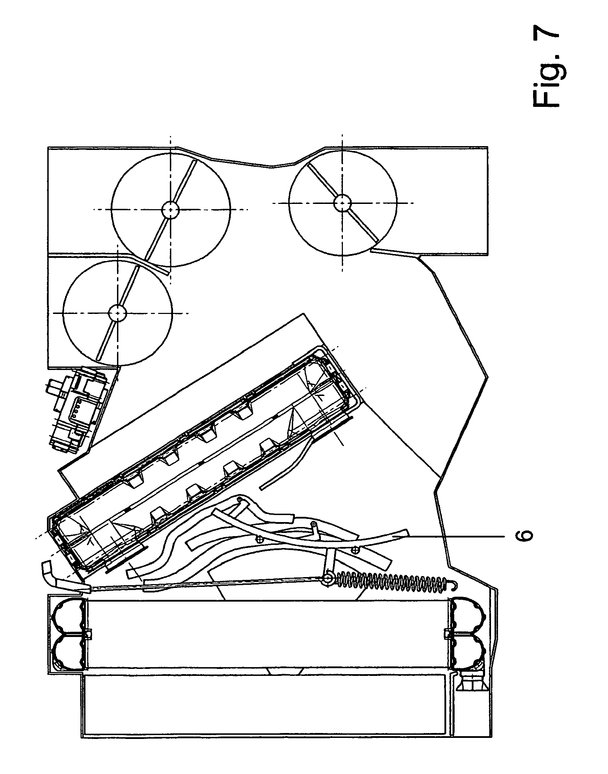

Die Stellbewegungen der Mischklappe 6 werden vorliegend über die Welle 11 und die oben und unten an der Welle 11 ausgebildeten Hebelarme 10 an die Hauptklappe 6' über die Betätigungszapfen 6b übertragen. Hierfür ist gemäß dem ersten Ausführungsbeispiel der zuvor genannte, elektrisch betätigbare Stellmotor vorgesehen. Gemäß einer Alternative kann auch eine direkte Kraftübertragung mittels Bowdenzügen o.ä. von der Bedienkonsole vorgesehen sein. Ein Beispiel einer zweiten Betätigungsart, bei dem die Stellbewegungen von Federkraft unterstützt werden, ist in Fig. 7 dargestellt. Hierbei greifen eine Zugfeder und ein Seilzug, der Teil eines Bowdenzugs ist, von der der Feder entgegen gesetzten Seite am Betätigungszapfen an. Beliebige andere Betätigungen sind möglich, beispielsweise mittels eines Riemengetriebes oder einer Flexwelle.

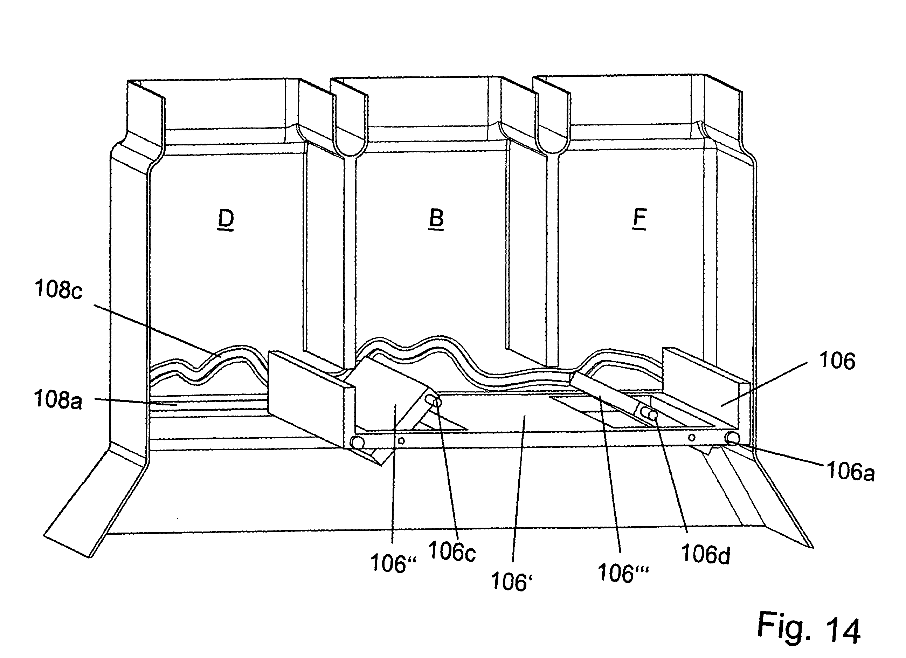

Durch eine Richtungsumkehr, d.h. einer umgekehrten Luftströmungsrichtung, kann aus der zuvor beschriebenen Mischvorrichtung eine Verteilervorrichtung werden. Eine Luftverteilervorrichtung gemäß einem zweiten Ausführungsbeispiel ist in Fig. 14 schematisiert dargestellt, wobei eine erfindungsgemäße Verteilerklappe 106 zur Luftverteilung von temperierter Luft auf drei parallel zueinander verlaufende, durch Trennwände voneinander getrennte Luftkanäle verwendet wird, vorliegend einen Defrostkanal D, einen Belüftungskanal B und einen Fußraumkanal F. Auf Grund der im Prinzip vergleichbaren Funktion werden im Folgenden gleichwirkende Elemente mit um 100 höheren Bezugszeichen als beim ersten Ausführungsbeispiel bezeichnet.

Die Verteilerklappe 106 gemäß dem zweiten Ausführungsbeispiel weist eine im Wesentlichen eben ausgebildete Hauptklappe 106' mit zwei endseitig in Luftströmungsrichtung abgewinkelten Anschlägen auf, die sich über eine Breite von etwas mehr als zwei der Luftkanäle erstreckt, d.h. zumindest einer der außen angeordneten Luftkanäle ist stets teilweise offen, so dass eine Zwangsbelüftung des Fahrzeuginnenraums vorgesehen ist.

Die Hauptklappe 106' wird von je zwei oben und unten angeordneten Zapfen 106a geführt, die in einer gerade ausgebildeten Kurvenbahn 108a positioniert sind. Die Betätigung der Verteilerklappe 106 erfolgt vorliegend mittels eines Seilzugs in Verbindung mit einem Stellmotor (nicht dargestellt).

Die Hauptklappe 106' weist zwei jeweils benachbart zu ihren Endseiten angeordnete Nebenklappen 106" und 106'" auf, die gegenüber der Hauptklappe 106' um Schwenkachsen verschwenkbar sind. Die Nebenklappen 106" und 106"' sind vorliegend schmetterlingsklappenartig ausgebildet, d.h. die Schwenkachsen verlaufen durch die Nebenklappenflächen und nicht entlang deren Kanten, wie beim ersten Ausführungsbeispiel. An den Nebenklappen 106" und 106"' sind oben und unten jeweils Zapfen 106c und 106d ausgebildet, die oben und unten jeweils in einer gemeinsamen Kurvenbahn 108c geführt sind.

Wird die Hauptklappe 106' verschoben, so öffnen bzw. schließen sich die Nebenklappen 106", 106"' entsprechend dem Verlauf der Kurvenbahn 108c, so dass theoretisch beliebige Luftverteilungen auf die drei Luftkanäle D, B und F möglich sind.

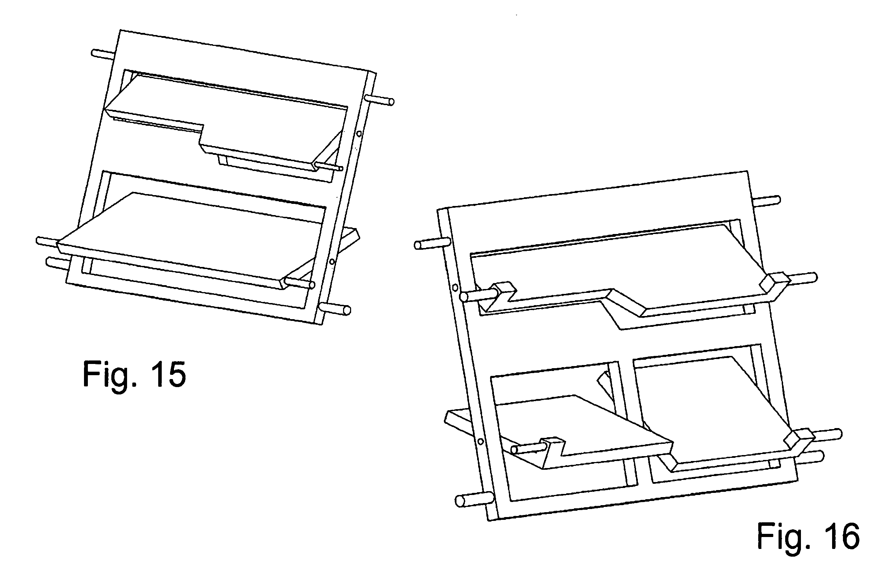

In den Figuren 15 und 16 sind Beispiele weiterer Klappenformen dargestellt, wobei in Fig. 15 eine Hauptklappe mit zwei nebeneinander angeordneten Nebenklappen unterschiedlicher Gestalt und in Fig. 16 eine Hauptklappe mit drei Nebenklappen dargestellt ist. Die Nebenklappen sind hierbei schmetterlingsklappenartig in der Hauptklappe angeordnet. Natürlich sind auch unterschiedliche Anordnungen von Nebenklappen in einer Hauptklappe möglich, d.h. eine zentrale Schwenkachse der einen Nebenklappe kann beispielsweise mit einer seitlichen Schwenkachse einer anderen Nebenklappe kombiniert sein.

Die Zahl der Nebenklappen ist nicht beschränkt, jedoch wird die Zahl der Nebenklappen bauraumbedingt im Bereich von eins bis vier liegen.

Die Hauptklappe kann - sowohl im Falle einer Verwendung als Mischklappe als auch als Verteilerklappe - gekrümmt, gerade oder abgewinkelt ausgebildet sein. Auch eine Kombination unterschiedlich ausgebildeter Teilbereiche der Hauptklappe ist möglich.

Bevorzugt öffnen alle Nebenklappen nach einer Seite, jedoch ist auch eine andere Ausgestaltung möglich, so dass beispielsweise eine erste Nebenklappe entgegen und eine zweite Nebenklappe in Luftströmungsrichtung öffnet.

Die Kurvenbahnen sind gemäß den vorliegend beschriebenen Ausführungsbeispielen im Luftführungsgehäuse ausgebildet. Alternativ können dieselben auch in einem getrennten Bauteil ausgebildet sein, das am Luftführungsgehäuse angebracht ist, oder die gesamte Anordnung von Klappen und Kurvenbahnen kann durch eine vormontierte Einheit gebildet sein, welche in das Luftführungsgehäuse eingesetzt wird.

## Patentansprüche

1. Luftverteiler- und/oder Luftmischvorrichtung mit einem Luftführungsgehäuse (2) und einer im Luftführungsgehäuse (2) angeordneten, verstellbaren Klappe (6; 106), welche Zapfen (6a; 106a) aufweist, die in mindestens einer Kurvenbahn (8a; 108a) geführt sind, **dadurch** gekennzeichet, dass die Klappe (6; 106) in ihrer Haupt-Klappenfläche integriert mindestens eine Öffnung aufweist, welche mittels einer an der Haupt-Klappen-Räche angebrachten und gegenüber derselben verschwenkbaren Nebenklappe (6", 6"'; 106", 106"') regelbar verschließ- und öffenbar ist und wobei die Nebenklappe (6", 6"'; 106", 106'") mindestens einen Zapfen (6c, 6d; 106c, 106d) aufweist, welcher in einer Kurvenbahn (8c, 8d; 108c) geführt ist.

2. Luftverteiler- und/oder Luftmischvorrichtung nach Anspruch 1, **dadurch gekennzeichnet, dass** zwei bis vier, insbesondere zwei oder drei, Nebenklappen (6", 6'"; 106", 106"') vorgesehen sind.

3. Luftverteiler- und/oder Luftmischvorrichtung nach einem der vorhergehenden Ansprüche, **dadurch gekennzeichnet, dass** die Schwenkachsen der Nebenklappen (6", 6"'; 106", 106''') parallel zueinander verlaufen.

4. Luftverteiler- und/oder Luftmischvorrichtung nach einem der vorhergehenden Ansprüche, **dadurch gekennzeichnet, dass** die Klappe (6) bogenförmig gekrümmt ausgebildet ist, wobei die Nebenklappe (6", 6"') In Richtung Krümmungsmittelpunkt öffnet.

5. Luftverteiler- und/oder Luftmischvorrichtung nach einem der vorhergehenden Ansprüche, **dadurch gekennzeichnet, dass** die Nebenklappe (6". 6"') mittels an einer Kante verlaufenden Scharnieren, insbesondere mittels Filmscharnieren, an der Klappe (6) verschwenkbar angebracht ist.

6. Luftverteiler- und/oder Luftmischvorrichtung nach einem der vorhergehenden Ansprüche, **dadurch gekennzeichnet, dass** die Nebenklappe (106", 106"') schmetterlingsklappenartig an der Klappe (106) verschwenkbar angebracht ist.

7. Luftverteiler- und/oder Luftmischvorrichtung nach einem der vorhergehenden Ansprüche, **dadurch gekennzeichnet, dass** mindestens zwei Nebenklappen (106", 106"') vorgesehen sind, welche mittels Zapfen (106c, 106d) betätigbar sind, die in einer gemeinsamen Kurvenbahn (108c) verlaufend angeordnet sind.

8. Luttverteiler- und/oder Luftmischvorrichtung nach einem der vorhergehenden Ansprüche, **dadurch gekennzeichnet, dass** die Klappe (6) gekrümmt ausgebildet ist, wobei der Krümmungsmittelpunkt der Klappe (6) auf der Seite der Klappenfläche liegt, die von der Seite, auf weicher eine Welle (11) zur Betätigung der Klappe (6) angeordnet ist, abgewandt ist.

9. Kraftfahrzeug-Klimaanlage **gekennzeichnet durch** mindestens eine Luftverteiler- oder Luftmischvorrichtung nach einem der vorhergehenden Ansprüchen.

## Claims

1. An air distributing and/or air mixing device, comprising an air conducting housing (2) and an adjustable flap (6; 106) disposed in the air conducting housing (2), the flap comprising pins (6a; 106a) guided in at least one curved track (8a; 108a),
**characterized in that** the flap (6; 106) comprises, integrated in the main flap surface thereof, at least one opening, which can be closed and opened in a controllable fashion by means of a secondary flap (6", 6"'; 106", 106''') attached to the main flap surface and pivotable with respect to the same, and wherein the secondary flap (6", 6'", 106", 106"') comprises at least one pin (6c, 6d; 106c, 106d), which is guided in a curved track (8c, 8d; 108c).

2. The air distributing and/or air mixing device according to claim 1, **characterized in that** two to four, and more particularly two or three, secondary flaps (6", 6"'; 106" , 106"') are provided.

3. An air distributing and/or air mixing device according to any one of the preceding claims, **characterized in that** the pivot axes of the secondary flaps (6", 5"'; 106", 106"') are parallel to each other.

4. An air distributing and/or air mixing device according to any one of the preceding claims, **characterized in that** the flap (6) has an arched curve design, wherein the secondary flap (6" 6"') opens in the direction of the center of the curvature.

5. An air distributing and/or air mixing device according to any one of the preceding claims, **characterized in that** the secondary flap (6", 6"') is pivotable attached to the flap (6') by means of hinges running along an edge, in particular by means of film hinges.

6. An air distributing and/or air mixing device according to any one of the preceding claims, **characterized in that** the secondary flap (106", 106"') is pivotably attached to the flap (106) in a butterfly flap-like manner.

7. An air distributing and/or air mixing device according to any one of the preceding claims, **characterized in that** at least two secondary flaps (106'', 106"') are provided, which can be actuated by means of pins (106c, 106c) disposed so as to run in a common curved track (108c).

8. An air distributing and/or air mixing device according to any one of the preceding claims, **characterized in that** the flap (6) has a curved design, wherein the center of curvature of the flap (6) is located on the side of the flap surface that faces away from the side on which a shaft (11) for actuating the flap (6) is disposed.

9. A motor vehicle air-conditioning system, **characterized by** at least one air distributing and/or air mixing device according to any one of the preceding claims.

## Revendications

1. Dispositif répartiteur d'air et / ou mélangeur d'air comprenant un carter de guidage d'air (2) et un volet (6 ; 106), réglable, disposé dans le carter de guidage d'air (2), lequel volet présente des tourillons (6a ; 106a) qui sont guidés dans au moins une piste incurvée (8a ; 108a),
**caractérisé en ce que** le volet (6 ; 106) présente au moins une ouverture intégrée dans la surface principale du volet, laquelle ouverture peut être obturée et ouverte, de façon réglable, au moyen d'un volet secondaire (6", 6"'; 106", 106"') fixé sur la surface principale du volet et pouvant pivoter par rapport à celle-ci, et où le volet secondaire (6", 6"' ; 106", 106"') présente au moins un tourillon (6c, 6d ; 106c, 106d) qui est guidé dans une piste incurvée (8c, 8d ; 108c).

2. Dispositif répartiteur d'air et / ou mélangeur d'air selon la revendication 1, **caractérisé en ce qu'**il est prévu deux à quatre, en particulier deux ou trois, volets secondaires (6", 6"', 106", 106"').

3. Dispositif répartiteur d'air et / ou mélangeur d'air selon l'une ou l'autre des revendications précédentes, **caractérisé en ce que** les axes de pivotement des volets secondaires (6", 6"'; 106", 106"') s'étendent parallèlement entre eux.

4. Dispositif répartiteur d'air et / ou mélangeur d'air selon l'une quelconque des revendications précédentes, **caractérisé en ce que** le volet (6) est configuré en étant courbé de façon arquée, le volet secondaire (5", 6"') s'ouvrant en direction du point milieu de courbure.

5. Dispositif répartiteur d'air et / ou mélangeur d'air selon l'une quelconque des revendications précédentes, **caractérisé en ce que** le volet secondaire (6", 6"') est fixé sur le volet (6) en pivotant au moyen de charnières, en particulier au moyen de charnières pelliculaires s'étendant sur un bord.

6. Dispositif répartiteur d'air et / ou mélangeur d'air selon l'une quelconque des revendications précédentes, **caractérisé en ce que** le volet secondaire (106", 106"') est fixé en pivotant sur le volet (106), à la façon d'un volet papillon.

7. Dispositif répartiteur d'air et / ou mélangeur d'air selon l'une quelconque des revendications précédentes, **caractérisé en ce qu'**il est prévu au moins deux volets secondaires (106", 106"') qui peuvent être actionnés au moyen de tourillons (106c, 106d) qui sont disposés en s'étendant dans une piste incurvée commune (108c).

8. Dispositif répartiteur d'air et / ou mélangeur d'air selon l'une quelconque des revendications précédentes, **caractérisé en ce que** le volet (6) est configuré de façon courbe, où le point milieu de courbure du volet (6) se trouve sur le côté de la surface de volet qui est placé à l'opposé du côté sur lequel est disposé un arbre (11) servant à actionner le volet (6).

9. Système de climatisation d'un véhicule automobile **caractérisé par** au moins un dispositif répartiteur d'air et / ou mélangeur d'air selon l'une quelconque des revendications précédentes.
